# EUROPÄISCHE PATENTSCHRIFT

(11) **EP 1 920 142 B1**
(45) Veröffentlichungstag und Bekanntmachung des Hinweises auf die Patenterteilung: **22.04.2009**
(21) Anmeldenummer: 06764285.0
(22) Anmeldetag: 01.08.2006
(51) Int. Cl.: F02C 9/28, F02C 9/00

(54) **VERFAHREN UND VORRICHTUNG ZUR ERHÖHUNG DER BETRIEBSFLEXIBILITÄT EINER STROMERZEUGENDEN ANLAGE, INSBESONDERE EINER GAS- ODER DAMPFTURBINE**
METHOD AND DEVICE FOR INCREASING THE OPERATIONAL FLEXIBILITY OF A CURRENT-GENERATING SYSTEM, IN PARTICULAR OF A GAS TURBINE OR STEAM TURBINE
PROCEDE ET DISPOSITIF PERMETTANT D'AUGMENTER LA SOUPLESSE D'EXPLOITATION D'UNE INSTALLATION GENERATRICE DE COURANT, EN PARTICULIER D'UNE TURBINE A GAZ OU D'UNE TURBINE A VAPEUR

(30) Priorität: 31.08.2005 EP 05018865
(43) Veröffentlichungstag der Anmeldung: 14.05.2008
(73) Patentinhaber: SIEMENS AKTIENGESELLSCHAFT, 80333 München (DE)
(72) Erfinder: EBNER, Günther, 91466 Gerhardshofen (DE); HERZOG, Tobias, 91083 Baiersdorf (DE)
(86) Internationale Anmeldenummer: PCT/EP2006/064918
(87) Internationale Veröffentlichungsnummer: WO 2007/025827

(56) Entgegenhaltungen:
- US-A- 4 583 360
- US-A1- 2004 103 068
- SINDELAR R: "EFFEKTIVE TURBINENREGELUNG" BWK BRENNSTOFF WARME KRAFT, SPRINGER VDI VERLAG, DUSSELDORF, DE, Bd. 51, Nr. 7/8, Juli 1999 (1999-07), Seiten 41-45, XP000847461 ISSN: 1618-193X

## Beschreibung

Die Erfindung betrifft ein Verfahren zur Erhöhung der Betriebsflexibilität einer stromerzeugenden Anlage mit Turbosatz umfassend eine Turbine und einen an die Turbine angekoppelten, elektrischen Generator. Die Erfindung betrifft weiterhin eine Vorrichtung die insbesondere die Durchführung des Verfahrens erlaubt. Weiterhin betrifft die Erfindung eine Gas- und eine Dampfturbine.

Der Strommarkt wird neben der Regelenergie besonders durch verbraucherbedingte Spitzenlasten beeinflusst. Diese sind teilweise oft unvorhersehbar. Saisonbedingte, vorhersehbare Schwankungen, wie z.B. bestimmte Feiertage und Großabnehmer, wie die Industrie, stellen hier häufig einen Ausnahmefall dar, da oftmals bekannt ist, wann stromverbrauchende Maschinen an oder abgefahren werden. Um dennoch einen flächendeckenden Stromverbrauch zu sichern, werden stromerzeugende Anlagen, wie Gas- und Dampfkraftwerke, von den Großabnehmern über die benötigte Strommenge zu einem gewünschten Zielzeitpunkt informiert. Damit zum vertraglichen Zielzeitpunkt die Gas- oder Dampfkraftwerke die gewünschte Leistung abgeben, müssen die Turbosätze der Kraftwerke vom Bedienpersonal frühzeitig gestartet werden. Die gewünschte Leistung wird daher zumeinst viel zu früh erreicht. Dadurch entstehen dem Kraftwerksbetreiber unnötige Kosten durch zu frühes Anfahren, welche von Großabnehmern, wie der Industrie, und Kleinabnehmern, wie den einzelnen Haushalten getragen werden müssen. Dies ist gerade in einem liberalisierten Strommarkt von Nachteil.

Das Dokument Dl (US2004/0103068 A1) offenbart ein Verfahren und eine Vorrichtung zur Erhöhung des Betriebsgewinns beim Betrieb einer Kraftwerksanlage. Bei diesem Verfahren wird die Feuerungstemperatur als Kontrollvariable über ein nichtlineares Optimierungsverfahren derart ermittelt, dass der Gesamtkomplex aus Energieproduktionsgewinn, Wartungskosten und Lebensdauer der Anlage optimiert wird.

Aufgabe der Erfindung ist daher die Angabe eines Verfahrens zur Erhöhung der Betriebsflexibilität einer stromerzeugenden Anlage mit Turbosatz. Eine weitere Aufgabe ist die Angabe einer Vorrichtung welche insbesondere eine Durchführung des Verfahrens erlaubt. Das Verfahren als auch die Vorrichtung sollen sowohl in einer Dampf- als auch in einer Gasturbine einsetzbar sein.

Diese auf das Verfahren bezogene Aufgabe wird erfindungsgemäß gelöst durch die Angabe eines Verfahrens zur Erhöhung der Betriebsflexibilität einer stromerzeugenden Anlage mit Turbosatz umfassend eine Turbine und einen an die Turbine angekoppelten, elektrischen Generator, wobei ein Leistungssollwert vorgegeben wird und ein zukünftiger Zielzeitpunkt vorgegeben wird, bei dem der Turbosatz den Leistungssollwert aufweisen soll, so dass mittels des Leistungssollwerts und des Zielzeitpunkts eine Berechnung einer zeitabhängigen Leistungskurve automatisch, insbesondere computergestützt erfolgt, wobei die Leistungskurve derart ermittelt wird, dass sie lebensdauerverlängernd auf den Generator und die Turbine wirkt, wobei der Turbosatz ausgehend von einer Ist-Leistung zu einer Ist-Zeit entlang der Leistungskurve derart gefahren wird, so dass der vorgegebene Leistungssollwert zum vorgegeben Zielzeitpunkt erreicht wird.

Die Erfindung geht von der Erkenntnis aus, dass der zu früh erreichte Leistungssollwert und die damit verbundenen Betriebskosten auf der manuellen Handhabung des Systems beruhen. Der Turbosatz wird aufgrund dieser manuellen Handhabung zu früh oder aber auch mit der falschen Beschleunigung hochgefahren. Die Erfindung geht von dem Ansatz aus, dass sowohl der Leistungssollwert, als auch der zukünftige Zielzeitpunkt, bei dem der Turbosatz den Leistungssollwert aufweisen soll, vorgegeben werden. Dies kann jederzeit über beispielsweise ein Bedienpult vom Bedienpersonal eingegeben werden. Weiterhin sind durch die Betriebsdaten auch die Ist-Leistung und der Ist-Zeitpunkt bekannt. Mittels dieser Werte wird nun eine Leistungskurve ermittelt. Diese Leistungskurve beinhaltet einen Startpunkt, zu welchem der Turbosatz hochzufahren beginnt oder bei Erniedrigung der Leistung zu einem gewissen Zielzeitpunkt, auch runtergefahren wird. Weiterhin beinhaltet diese Leistungskurve auch die Beschleunigung, mit der der Turbosatz ausgehend vom Ist-Zeitwert bis zum Zielzeitwert hoch- bzw. runtergefahren wird. Der Turbosatz wird also ausgehend von der Ist-Leistung zu der Ist-Zeit entlang der Leistungskurve derart gefahren, dass der vorgegebene Leistungssollwert zum vorgegeben Zielzeitpunkt erreicht wird. Dies bewirkt eine Einsparung von Nutzenergie da die Leistung im Wesentlichen punktgenau bereitsteht. Das frühzeitige Erreichen des Leistungssollwerts durch das manuelle Hoch- und Runterfahren wird vermieden. Dies spart Kosten. Weiterhin ist ein genaueres Lastprofil erstellbar. Durch ein genaueres Lastprofil kann der Stromverbrauch besser gemessen werden und auf die Groß- und Kleinkunden umgerechnet werden was wiederum die Kleinkunden entlastet. Ein weiterer Vorteil ist die Bedienfreundlichkeit durch die Entlastung des Bedienpersonals.

Dadurch, dass die Leistungskurve so gewählt, dass diese lebensdauerverlängernd auf den Generator und die Turbine wirkt, können weiterhin Instandhaltungskosten und Wartungskosten gesenkt werden.

Die automatische Berechnung der Leistungskurve entlastet das Bedienpersonal zusätzlich. Zudem werden Bedienfehler vermieden.

In weiterer bevorzugter Ausgestaltung wird die Leistungskurve unter Berücksichtigung der minimalen und maximalen Leistungskurve berechnet. Somit werden Schäden an dem Turbosatz beim Hoch bzw. Runterfahren vermieden.

Bevorzugt wird bei einem Turbosatz, welcher in einer Gasturbine vorgesehen ist, die Leistungskurve so gewählt, dass die NOx-Emissionen möglichst gering gehalten werden. Dies hängt vom Wirkungsgrad des Turbosatzes ab. Unnötige Emissionen durch unsachgemäßes Hoch bzw. Runterfahren werden vermieden.

Diese auf die Vorrichtung bezogene Aufgabe wird erfindungsgemäß gelöst durch die Angabe einer Vorrichtung zur Erhöhung der Betriebsflexibilität einer stromerzeugenden Anlage mit Turbosatz, umfassend eine Turbine und einen an die Turbine angekoppelten, elektrischen Generator, mit einer Eingabeeinheit für einen Leistungssollwert, einer Eingabeeinheit für einen Zielzeitpunkt, sowie einer Ausleseinheit für eine Ist-Leistung und eine Ausleseinheit für eine Ist-Zeit, wobei die Ausleseeinheiten und die Eingabeeinheiten mit einer Berechnungseinheit zur Berechnung einer Leistungskurve verbunden sind. Die Vorrichtung ist insbesondere dafür geeignet, das oben beschriebene Verfahren durchzuführen. Die Vorteile des Verfahrens ergeben sich daher auch für die Vorrichtung.

Weitere Merkmale, Eigenschaften und Vorteile der Erfindung ergeben sich aus der Beschreibung eines Ausführungsbeispiels und aus den weiteren abhängigen Ansprüchen.

Im Folgenden wird die Erfindung beispielhaft anhand einer Zeichnung näher erläutert.

Darin zeigt in vereinfachter und nicht maßstäblicher Darstellung:
- FIG 1: Die Beschreibung des Verfahrens anhand der Leistungskurven,
- FIG 2: Beschreibung der Vorrichtung.

Gleiche Teile sind in allen Figuren mit denselben Bezugszeichen versehen.

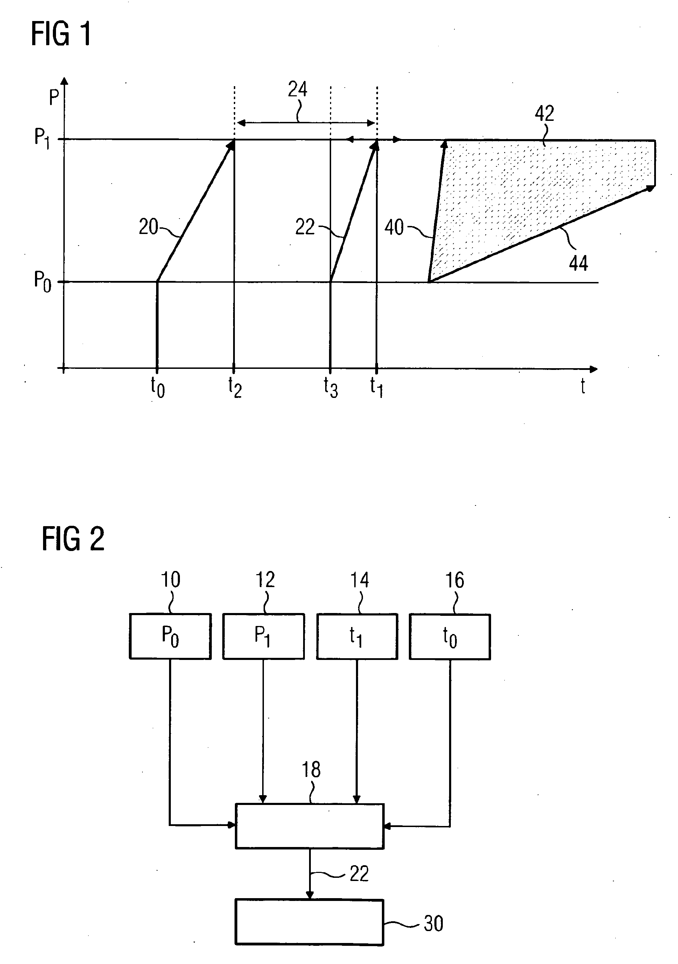

FIG 1 zeigt die Kurve 20 des Stands der Technik anhand derer der Turbosatz 30 umfassend einen Generator und eine Turbine manuell vom Bedienpersonal hochgefahren wird. Die Kurve ist gegenüber der Zeit t und der Leistung P aufgetragen. Der Einfachheit und übersichtlicheren Darstellung wegen, werden in der FIG 1 lediglich lineare Leistungskurven dargestellt. Die Ist-Zeit ist dabei durch die Zeit t₀, die Ist-Leistung durch die Leistung P₀ gekennzeichnet. Zu einem Zielzeitpunkt t₁ soll eine Leistungssollwert P₁ bereitstehen. Das manuelle hochfahren des Turbosatzes wird durch die Kurve 20 gekennzeichnet. Diese wird so gestartet dass der Leistungssollwert P₁ am Zielzeitpunkt t₁ bereitsteht. Durch das frühe hochfahren des Turbosatzes liegt der Leistungssollwert P₁ jedoch bereits an einem Zeitpunkt t₂ vor. Innerhalb der Zeitdauer 24, welche die Differenz zwischen dem Zeitpunkt t₂ und dem Zielzeitpunkt t₁ darstellt, wird daher ein unerwünschter Leistungssollwert P₁ gefahren, wodurch sich hohen Kosten ergeben. Im Gegensatz dazu wird in der Erfindung der Turbosatz 30 erst zu einem späteren Zeitpunkt, dem Zeitpunkt t₃ gestartet. Somit wird eine unnötige Zeitperiode 24 bei einem zu hohen Leistungssollwert P₁ vermieden. Der Turbosatz 30 wird anhand einer automatisch berechneten Leistungskurve 22 hochgefahren. Diese Leistungskurve 22 wird dergestalt gewählt dass der Turbosatz 30 keinen Schaden erleidet, das heißt dass diese Leistungskurve 22 lebenserhaltend wirkt. Bei einer Gasturbine wird die Leistungskurve 22 dergestalt gewählt, dass sich dies positiv auf die NOx-Emissionen auswirkt. Die Leistungskurve 22 wird dergestalt gewählt dass sie innerhalb der zulässigen Leistungskurven, anhand derer der Turbosatz 30 hoch bzw. runtergefahren werden kann, liegen. Dieser zulässige Bereich 42 ist durch die maximale Leistungskurve 40 und die minimale Leistungskurve 44 dargestellt.

FIG 2 zeigt schematisch eine Vorrichtung zur Erhöhung der Betriebsflexibilität einer stromerzeugenden Anlage mit Turbosatz, welche insbesondere eine Durchführung des Verfahrens erlaubt. Diese umfasst eine Eingabeeinheit 12 für den Leistungssollwert und eine Eingabeeinheit 14 für den Zielzeitpunkt. Weiterhin umfasst die Vorrichtung eine Ausleseeinheit für die Ist-Leistung 10 und eine Ausleseeinheit 16 für die Ist-Zeit. Die Ausleseeinheiten 10,16 sowie die Eingabeeinheiten 12,14 sind zum Datenaustausch mit einer Berechnungseinheit 18 verbunden. In der Berechnungseinheit 18 wird mittels dieser Daten sowie der Betriebsdaten, welche beispielsweise die minimale Leistungskurve 44 und die maximale Leistungskurve 40 beinhalten, automatisch die Leistungskurve 22 berechnet. Die Leistungskurve 22 wird dergestalt von der Berechnungseinheit 18 berechnet, dass dies dem Turbosatz 30 nicht schädigt, das heißt, lebensdauerverlängernd wirkt. Die so berechnete Leistungskurve 22 wird an den Turbosatz 30 für das automatische Hoch bzw. Runterfahren geleitet.

## Patentansprüche

1. Verfahren zur Erhöhung der Betriebsflexibilität einer stromerzeugenden Anlage mit Turbosatz (30) umfassend eine Turbine und einen an die Turbine angekoppelten, elektrischen Generator,
**dadurch gekennzeichnet,**
- **dass** ein Leistungssollwert (P₁) vorgegeben wird;
- **dass** ein zukünftiger Zielzeitpunkt (t₁) vorgegeben wird, bei dem der Turbosatz (30) den Leistungssollwert (P₁) aufweisen soll,
- **dass** mittels des Leistungssollwertes. (P₁) und des Zielzeitpunkts (t₁) eine Berechnung einer zeitabhängigen Leistungskurve (22) automatisch, insbesondere computergestützt, erfolgt, wobei die Leistungskurve (22) derart ermittelt wird, dass sie lebensdauerverlängernd auf den Generator und die Turbine wirkt, und
- **dass** der Turbosatz (30) ausgehend von einer Ist-Leistung (P₀) zu einer Ist-Zeit (t₀) entlang der Leistungskurve (22) derart gefahren wird, dass der vorgegebene Leistungssollwert (F₁) zum vorgegeben Zielzeitpunkt (t₁) erreicht wird.

2. Verfahren nach Anspruch 1,
**dadurch gekennzeichnet,**
**dass** die Leistungskurve (22) unter Berücksichtigung einer maximalen Leistungskurve (40), die durch einen maximal zulässigen Leistungsgradienten charakterisiert ist, und einer minimalen Leistungskurve (44), die durch einen minimalen Leistungsgradienten charakterisiert ist, berechnet wird.

3. Verfahren nach Anspruch 1 oder 2,
**dadurch gekennzeichnet,**
**dass** dieses bei einem Turbosatz (30) einer Dampfturbine angewendet wird.

4. Verfahren nach Anspruch 1 oder 2,
**dadurch gekennzeichnet,**
**dass** dieses bei einem Turbosatz (30) einer Gasturbine angewendet wird.

5. Verfahren nach Anspruch 4,
**dadurch gekennzeichnet, dass** die Leistungskurve (22) so gewählt wird, dass die NOx-Emissionen der Gasturbine möglichst gering gehalten werden.

6. Vorrichtung zur Erhöhung der Betriebsflexibilität einer stromerzeugenden Anlage mit Turbosatz (30) umfassend eine Turbine und einen an die Turbine angekoppelten, elektrischen Generator, mit einer Eingabeeinheit (12) für einen Leistungssollwert (P₁), einer Eingabeeinheit (14) für einen Zielzeitpunkt (t₁), sowie einer Ausleseinheit (10) für eine Ist-Leistung (P₀) und eine Ausleseinheit (16) für eine Ist-Zeit (t₀), wobei die Ausleseeinheiten (10,16) und die Eingabeeinheiten (12,14) mit einer Berechnungseinheit (18) zur automatischen Berechnung einer Leistungskurve (22) gemäß einem Verfahren nach einem der Ansprüche 1 bis 5 verbunden sind.

7. Vorrichtung nach Anspruch 6,
**dadurch gekennzeichnet, dass** in der Berechnungseinheit (18) die Betriebsdaten in einem Kennfeld hinterlegt sind.

8. Vorrichtung nach Anspruch 6 oder 7,
**dadurch gekennzeichnet, dass** die Berechnungseinheit (18) zum automatischen Berechnen der Leistungskurve (22) unter Berücksichtigung der Betriebsdaten ausgelegt ist.

9. Turbosatz (30) mit einer Gasturbine und mit einer Vorrichtung nach einem der Ansprüche 6 bis 8.

10. Turbosatz (30) mit einer Dampfturbine und mit einer Vorrichtung nach einem der Ansprüche 6 bis 8.

## Claims

1. Method for increasing the operational flexibility of a current generating system with a turboset (30) comprising a turbine and an electrical generator which is coupled to the turbine.
**characterised in that,**
- a power setpoint value (P₁) is predetermined,
- a future target time (t₁) is predetermined at which the turboset (30) is to exhibit the power setpoint value (P₁),
- a power curve (22) is determined automatically, in particular with computer support, by means of the power setpoint value (P₁) and the target time (t₁) , with the power curve (22) being determined such that it acts to prolong the service life of the generator and the turbine, and
- the turboset (30), starting from an actual power (P₀) at an actual time (t₀), is moved along the power curve (22) so that the predetermined power setpoint value (P₁) is reached at the predetermined target time (t₁).

2. Method according to claim 1,
**characterised in that**
the power curve (22) is computed taking into account a maximum power curve (40), which is **characterized by** a maximum permissible power gradient, and a minimum power curve (44) which is **characterized by** a minimum power gradient.

3. Method according to one of claims 1 or 2.
**characterised in that**
this method is applied for a turboset (30) of a steam turbine.

4. Method according to one of claims 1 or 2.
**characterised in that**
this method is applied for a turboset (30) of a gas turbine.

5. Method according to claim 4,
**characterised in that** the power curve (22) is selected so that the NOx-emissions of the gas turbine are kept as low as possible.

6. Device for increasing the operational flexibility of a current generating system with turboset (30) comprising a turbine and an electrical generator coupled to the turbine, with an input unit (12) for a power setpoint value (P₁), an input unit (14) for a target time (t₁), as well as a readout unit (10) for an actual power (P₀) and a readout unit (16) for an actual time (t₀), with the readout units (10, 16) and the input units (12, 14) being connected to a computation unit (18) for automatically computing the power curve (22) in accordance with a method as claimed in one of the claims 1 to 5.

7. Device according to claim 6,
**characterised in that** the operating data is stored in a characteristics field in the computation unit (18).

8. Device according to claim 6 or 7,
**characterised in that** the computation unit (18) is designed for automatic computation of the power curve (22) taking account of the operating data.

9. Turboset (30) with a gas turbine and with a device according to one of the claims 6 to 8.

10. Turboset (30) with a steam turbine and with a device according to one of the claims 6 to 8.

## Revendications

1. Procédé d'augmentation de la souplesse de fonctionnement d'une installation de production du courant à groupe ( 30 ) turboalternateur comprenant une turbine et un alternateur électrique couplé à la turbine,
**caractérisé,**
- **en ce que** l'on prescrit une valeur ( P1 ) de consigne de puissance,
- **en ce que** l'on prescrit un instant ( t1 ) cible futur ou le groupe ( 30 ) turboalternateur doit avoir la valeur ( P1 ) de consigne de puissance,
- **en ce qu'**au moyen de la valeur ( P1 ) de consigne de puissance et de l'instant ( t1 ) cible, on effectue automatiquement, notamment avec assistance informatique, un calcul d'une courbe ( 22 ) de puissance en fonction du temps, la courbe ( 22 ) de puissance étant déterminée de manière à ce qu'elle agisse sur l'alternateur et la turbine en prolongeant la durée de vie, et
- **en ce que** l'on fait fonctionner le groupe ( 30 ) turboalternateur le long de la courbe ( 22 ) de puissance à partir d'une puissance ( P0 ) réelle à un instant ( t0 ) réel de façon à atteindre la valeur ( P1 ) de consigne de puissance prescrite à l'instant ( t1 ) cible prescrit.

2. Procédé suivant la revendication 1,
**caractérisé en ce que** l'on calcule la courbe ( 22 ) de puissance en tenant compte d'une courbe ( 40 ) de puissance maximum, qui est **caractérisée par** un gradient de puissance maximum autorisé et d'une courbe ( 44 ) de puissance minimum, qui est **caractérisée par** un gradient de puissance minimum.

3. Procédé suivant la revendication 1 ou 2,
**caractérisé en ce qu'**on l'utilise pour un groupe ( 30 ) turboalternateur d'une turbine à vapeur.

4. Procédé suivant la revendication 1 ou 2,
**caractérisé en ce qu'**on l'utilise pour un groupe ( 30 ) turboalternateur d'une turbine à gaz.

5. Procédé suivant la revendication 4,
**caractérisé en ce que** l'on choisit la courbe ( 22 ) de puissance de manière à maintenir à une valeur aussi petite que possible les émissions de NOx de la turbine à gaz.

6. Dispositif d'augmentation de la souplesse de fonctionnement d'une installation produisant du courant, ayant un groupe ( 30 ) turboalternateur comprenant une turbine et un alternateur électrique couplé à la turbine, comprenant une unité ( 12 ) d'entrée d'une valeur ( P1 ) de consigne de puissance, une unité ( 14 ) d'entrée de l'instant ( t1 ) cible, ainsi qu'une unité ( 10 ) de lecture d'une puissance ( P0 ) réelle et une unité ( 16 ) de lecture d'un instant ( t0 ) réel, les unités ( 10, 16 ) de lecture et les unités ( 12, 14 ) d'entrée étant reliées à une unité ( 18 ) de calcul pour le calcul automatique d'une courbe ( 22 ) de puissance suivant un procédé selon l'une des revendications 1 à 5.

7. Dispositif suivant la revendication 6,
**caractérisé en ce que** dans l'unité ( 18 ) de calcul les données de fonctionnement sont mémorisées dans un champ de caractéristiques.

8. Dispositif suivant la revendication 6 ou 7,
**caractérisé en ce que** l'unité ( 18 ) de calcul est conçue pour le calcul automatique de la courbe ( 22 ) de puissance en tenant compte des données de fonctionnement.

9. Groupe ( 30 ) turboalternateur comprenant une turbine à gaz et un dispositif suivant l'une des revendications 6 à 8.

10. Groupe ( 30 ) turboalternateur comprenant une turbine à vapeur et un dispositif suivant l'une des revendications 6 à 8.
